# EUROPEAN PATENT APPLICATION

(11) **EP 4 644 742 A1**
(43) Date of publication of application: **05.11.2025**
(21) Application number: 25173432.3
(22) Date of filing: 30.04.2025
(51) Int. Cl.: F16K 11/074

(54) **MULTI-WAY VALVE WITH SEAL HAVING DECOUPLED SEAL FORCE VECTORS FOR REDUCED VALVE ACTUATION POWER REQUIREMENTS**

(30) Priority: 03.05.2024 US 202463642514 P
(71) Applicant: Stant USA Corp., Connersville, IN 47331 (US)
(72) Inventor: BROCK, Michael S., Connersville, Indiana 47731 (US); GROOM, J Bradley, Connersville, Indiana 47731 (US)
(74) Representative: Gille Hrabal Partnerschaftsgesellschaft mbB Patentanwälte

(57) **Abstract**

A multi-way valve (10, 210) adapted to control a flow of fluid to different fluid circuits includes a valve housing (12), a valve flow controller (14), and a sealing system (16, 216). The valve flow controller is arranged in the valve housing to control flow through the valve housing. The sealing system is configured to seal between the valve housing and the valve flow controller.

## Description

### CROSS REFERENCE TO RELATED APPLICATIONS

This application claims priority to and the benefit of U.S. Provisional Patent Application Number 63/642,514, filed 03 May 2024, the disclosure of which is now expressly incorporated herein by reference.

### TECHNICAL FIELD

The present disclosure relates to multi-way valves, and particularly to multi-way valves for controlling the flow of fluid to various fluid circuits. More particularly, the present disclosure relates to a multi-way valve with a seal having decoupled seal force vectors that enable lower-power valve actuation.

### BACKGROUND

Multi-way valves are used for many applications, including controlling the flow of fluid to various fluid circuits in a vehicle. However, there is a need for multi-way valves with improved sealing.

### SUMMARY

The present disclosure provides a multi-way valve with improved sealing. The multi-way valve may include a valve housing, a valve flow controller positioned in the valve housing to control the flow of fluid through the valve housing, and a sealing system configured to seal between the valve flow controller and the valve housing. The flow of fluid may be controlled to direct fluid to different fluid circuits in a system. The sealing system is configured to manage contact friction developed during movement of the valve flow controller so that the power required for valve actuation can be reduced.

According to an aspect of the present application, the valve housing may include a seal groove and may be shaped to define a valve cavity and a plurality of apertures that open into the valve cavity. The valve flow controller may include a valve rotor arranged in the valve cavity of the valve housing and an actuator. The valve rotor may be configured to rotate relative to the valve housing about a reference valve axis. The valve rotor may cooperate with the valve housing to define a plurality of flow paths when the valve rotor is rotated about the reference valve axis to control the flow of fluid through the valve housing. The actuator may be coupled to the valve rotor to drive rotation of the valve rotor about the reference valve axis.

According to an aspect of the present application, the sealing system may include a seal and a bias member. The seal may be arranged in the seal groove of the valve housing. The bias member may be configured to apply an axial force to the valve rotor to urge the valve rotor into engagement with the seal to seal therebetween. The seal may be shaped to include an outer portion that extends out of the seal groove of the valve housing toward the valve rotor, an inner portion opposite the outer portion and located in the seal groove, and a mid-portion located in the seal groove and extending between the outer portion and the inner portion. The outer portion of the seal may include an outer contact surface that engages the valve rotor to block movement of the fluid out of the plurality of flow paths between the outer contact surface and the valve rotor. The mid-portion may include a groove side contact surface that engages the seal groove of the valve housing to block movement of the fluid out of the plurality of flow paths between the groove side contact surface and the valve housing.

Additional features of the present disclosure will become apparent to those skilled in the art upon consideration of illustrative embodiments exemplifying the best mode of carrying out the disclosure as presently perceived.

### BRIEF DESCRIPTIONS OF THE DRAWINGS

The detailed description particularly refers to the accompanying figures in which:
Fig. 1 is a perspective view of a multi-way valve configured to control the flow of fluid to various fluid circuits in a vehicle;
Fig. 2 is a perspective view of a valve housing base of the multi-way valve of Fig. 1 and a seal of the multi-way valve located in a seal groove of the valve housing base to seal between components of the multi-way valve;
Fig. 3 is an exploded view of the multi-way valve of Fig. 1 showing the multi-way valve includes, from top to bottom, an actuator, a valve housing body, a bias member, a valve rotor, the seal, the valve housing base, and a manifold gasket, and further suggesting that the valve housing body and the valve housing base cooperate to form a valve cavity and the valve rotor and the seal are configured to be arranged in the valve cavity so that the seal is located between the valve rotor and the valve housing base to seal therebetween;
Fig. 4 is a view similar to Fig. 3 showing the valve rotor includes a valve rotor body that extends circumferentially about a reference valve axis and a valve rotor shaft that extends axially from the valve rotor body, and further suggesting that the bias member is configured to be arranged between the valve housing body and the valve rotor to apply an axial downward force to the valve rotor to urge the valve rotor into engagement with the seal;
Fig. 5 is a cross-section view of the multi-way valve of Fig. 1 showing the valve rotor body is shaped to define chambers that extend over different apertures formed in the valve housing base to fluidly connect the different apertures at different predetermined positions, and further showing that the seal is located within the seal groove of the valve housing base to seal between the valve rotor and the valve housing base;
Fig. 6 is an enlarged view of a portion of Fig. 5 showing the seal includes an outer portion that extends out of the seal groove to engage the valve rotor, an inner portion opposite the outer portion, and a mid-portion extending therebetween and including a groove side contact surface that engages sidewalls of the seal groove;
Fig. 7 is a detailed view of the bias member and the valve rotor showing that the bias member is a wave spring and the wave spring is configured to apply the axial downward force to the valve rotor body of the valve rotor;
Fig. 8 is a detailed view of the seal and the valve housing base showing that the seal includes an outer ring extending circumferentially about the reference valve axis, an inner ring located radially inward of the outer ring, and a plurality of divider members extending between and interconnecting the outer ring and the inner ring, and further showing that the seal groove substantially matches a shape of the seal to receive the seal therein;
Fig. 9 is a cross-section view of the multi-way valve of Fig. 1 showing the different apertures formed in the valve housing base and the seal surrounding each of the different apertures; and
Fig. 10 is a cross-section view of another embodiment of a multi-way valve including a different seal arranged in the seal groove of the valve housing base.

### DETAILED DESCRIPTION

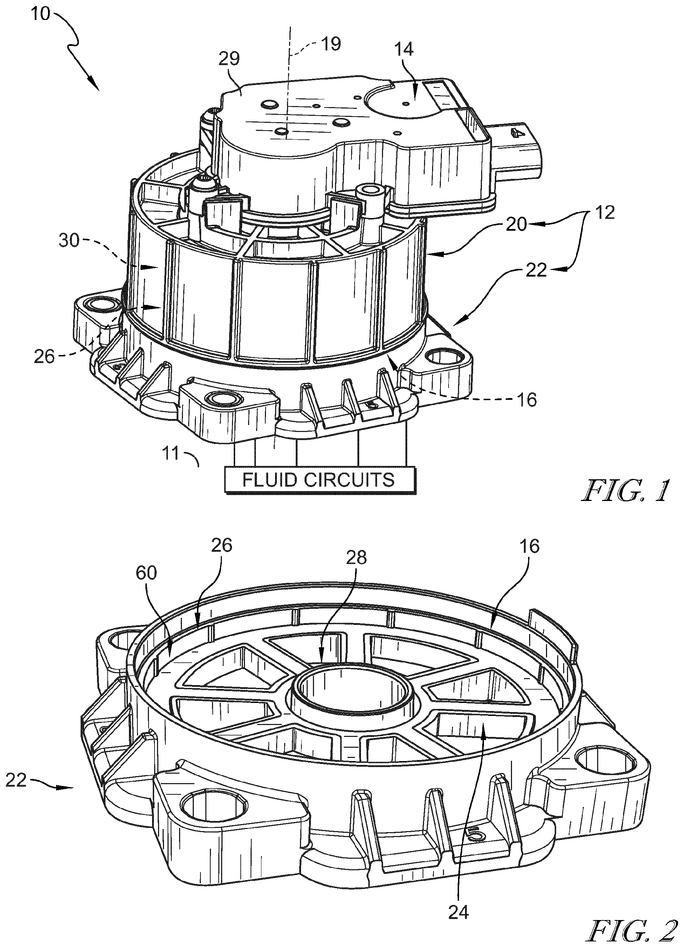

An illustrative multi-way valve 10 configured to control the flow of fluid to various fluid circuits 11 in a vehicle is shown in Fig. 1. The multi-way valve 10 includes a valve housing 12, a valve flow controller 14, and a sealing system 16. The valve flow controller 14 is arranged in the valve housing 12 to control the flow of fluid through the valve housing 12. The sealing system 16 is configured to seal between the valve housing 12 and the valve flow controller 14.

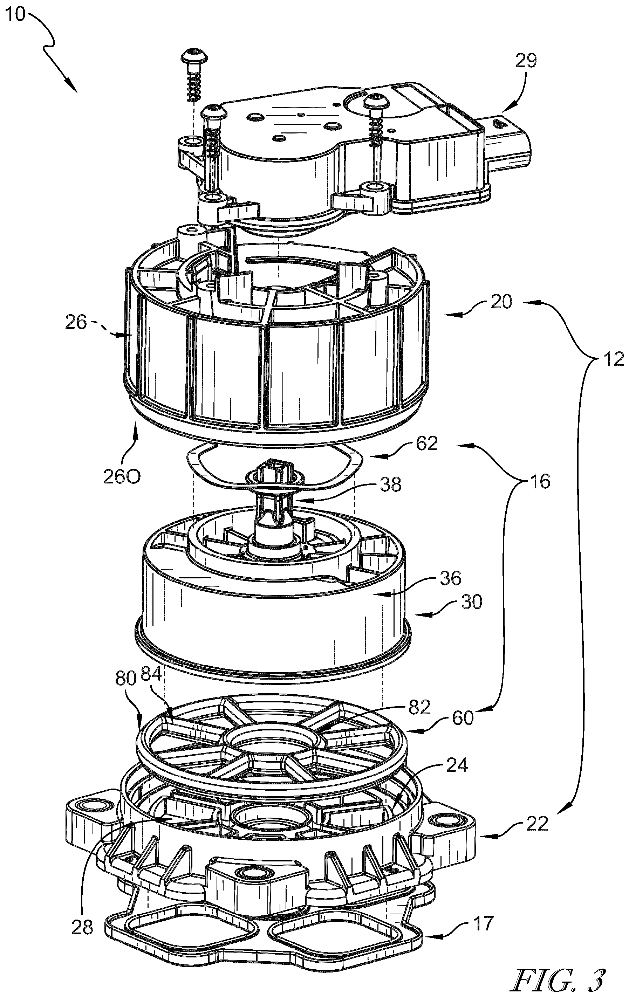

The valve housing 12 includes a valve housing body 20 and a valve housing base 22, as shown in Figs. 1 and 3. The valve housing base 22 is coupled with the valve housing body 20 to define a valve cavity 26 within the valve housing 12. The valve housing base 22 is formed to include a seal groove 24 and a plurality of apertures 28 that open into the valve cavity 26. The seal groove 24 receives a portion of the sealing system 16 therein.

The valve flow controller 14 includes a valve rotor 30 arranged in the valve cavity 26 formed by the valve housing 12 and an actuator 29, as shown in Figs. 1 and 3. The valve rotor 30 is configured to rotate relative to the valve housing 12 about a reference valve axis 19. The actuator 29 is coupled to the valve rotor 30 to drive rotation of the valve rotor 30.

The valve rotor 30 cooperates with the valve housing 12 to define a plurality of flow paths through the valve housing 12. For example, the plurality of flow paths may be the plurality of flow paths of U.S. Application No. 18/430,307 filed February 01, 2024, which is expressly incorporated by reference herein. As the valve rotor 30 is rotated about the reference valve axis 19 to different set positions, the valve rotor 30 forms the different flow paths to control a flow of fluid through the valve housing 12 to different fluid circuits 11.

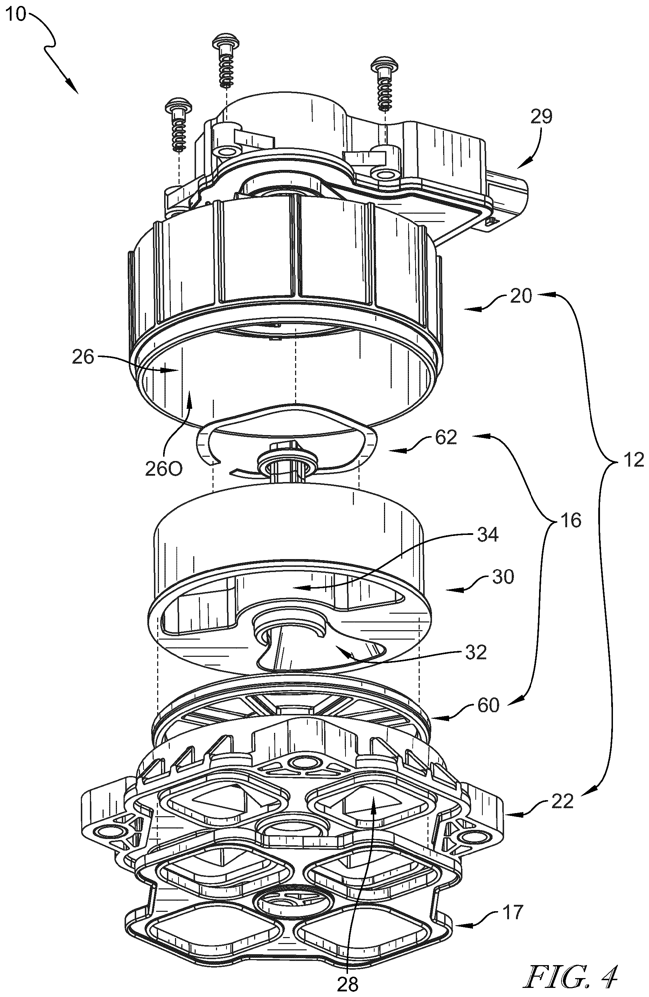

The sealing system 16 includes a seal 60 and a bias member 62, as shown in Figs. 3 and 4. The seal 60 is arranged in the seal groove 24 of the valve housing base 22 to seal between the valve housing base 22 and the valve rotor 30. The bias member 62 is located axially between the valve housing body 20 and the valve rotor 30 to apply an axial downward force F to the valve rotor 30 to urge the valve rotor 30 into sealing engagement with the seal 60.

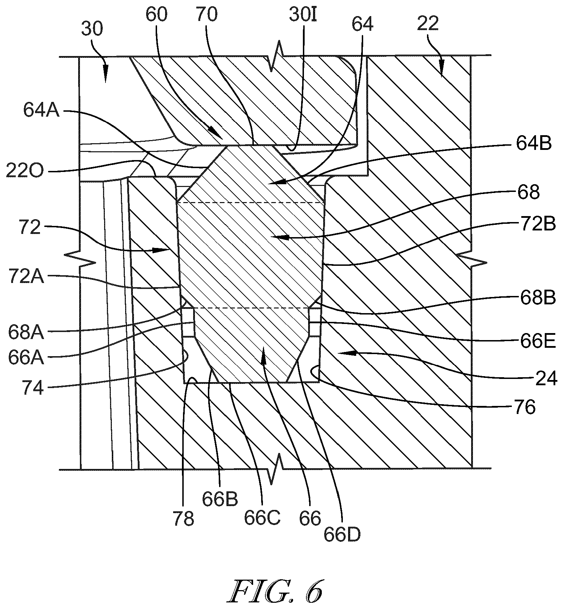

The seal 60 is shaped to include an outer portion 64, an inner portion 66, and a mid-portion 68, as shown in Fig. 6. The mid-portion 68 is located axially between the outer portion 64 and the inner portion 66 relative to the reference valve axis 19.

The outer portion 64 of the seal 60 extends out of the seal groove 24 toward the valve rotor 30, as shown in Fig. 6. The outer portion 64 includes an outer contact surface 70 that engages an inner surface 30I of the valve rotor 30 to block movement of the fluid out of the plurality of flow paths between the outer contact surface 70 and the valve rotor 30. The outer contact surface 70 is located outward of an outer wall 22O of the valve housing base 22 that defines the seal groove 24, as shown in Fig. 6.

The inner portion 66 of the seal 60 is axially opposite the outer portion 64 and located entirely in the seal groove 24, as shown in Fig. 6. The mid-portion 68 of the seal 60 is located entirely in the seal groove 24 and extends axially between the outer portion 64 and the inner portion 66. The mid-portion 68 includes a groove side contact surface 72 that engages the seal groove 24 of the valve housing base 22 to block movement of the fluid out of the plurality of flow paths between the groove side contact surface 72 and the valve housing base 22.

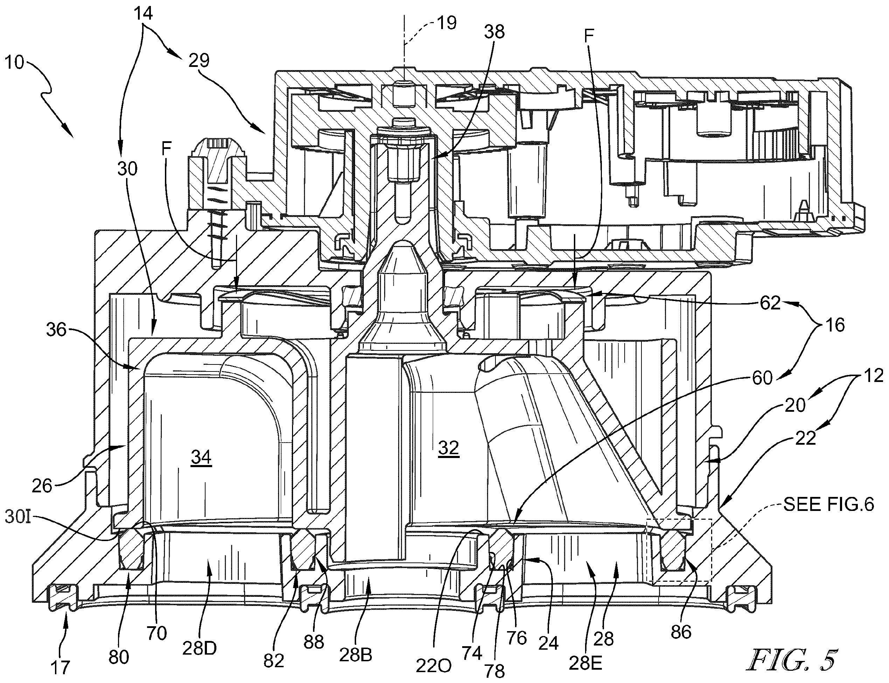

A rotor sealing force (i.e., the axial downward force F, as shown in Fig. 5) at the interface between the valve rotor 30 and the outer contact surface 70 of the outer portion 64 of the seal 60 is independent of, or de-coupled from, a housing sealing force at the interface between the seal groove 24 and the groove side contact surface 72 of the mid-portion 68 of the seal 60. Because these sealing forces are independent of one another, the rotor sealing force may be minimized such that the rotor sealing force does not drive torque of the valve rotor 30 to high levels. De-coupling of the rotor sealing force and the housing sealing force allows for the rotor sealing force to be minimized to ensure that excess friction is not applied to the valve rotor 30 by the outer contact surface 70 such that valve rotor 30 resists rotation. The reduction of friction applied to the valve rotor 30 allows for better performance of the actuator 29. Additionally, the reduction of friction ensures that a larger actuator is not required.

Other multi-way valves incorporate seals that may require sealing at the inner portion of the seal, the outer portion of the seal, and the groove side contact surface of the seal. Such sealing generally requires large amounts of force to ensure that a sufficient seal pressure is formed at each interface as the seal pressure at each interface is dependent on the same force. As the force increases to ensure that each interface is properly sealed, the torque of the valve rotor increases. These traditional seals may require the actuator to have an increased torque capability to overcome the friction of the seal between different components. Requiring an actuator with an increased torque capability may increase the cost and the size of the actuator. De-coupling the sealing forces for each interface, as well as eliminating the need for sealing at the inner portion of the seal, allows for the sealing forces to be minimized.

Turning again to the valve housing 12, the valve housing 12 includes the valve housing body 20 and the valve housing base 22, as shown in Figs. 1-4. The valve housing body 20 and the valve housing base 22 cooperate to form the valve cavity 26. The valve housing base 22 includes a plurality of apertures 28A-E that open into the valve cavity 26, as shown in Figs. 2, 8, and 9. The valve housing base 22 is coupled to a lower end of the valve housing body 20 to close a bottom opening 26O to the valve cavity 26.

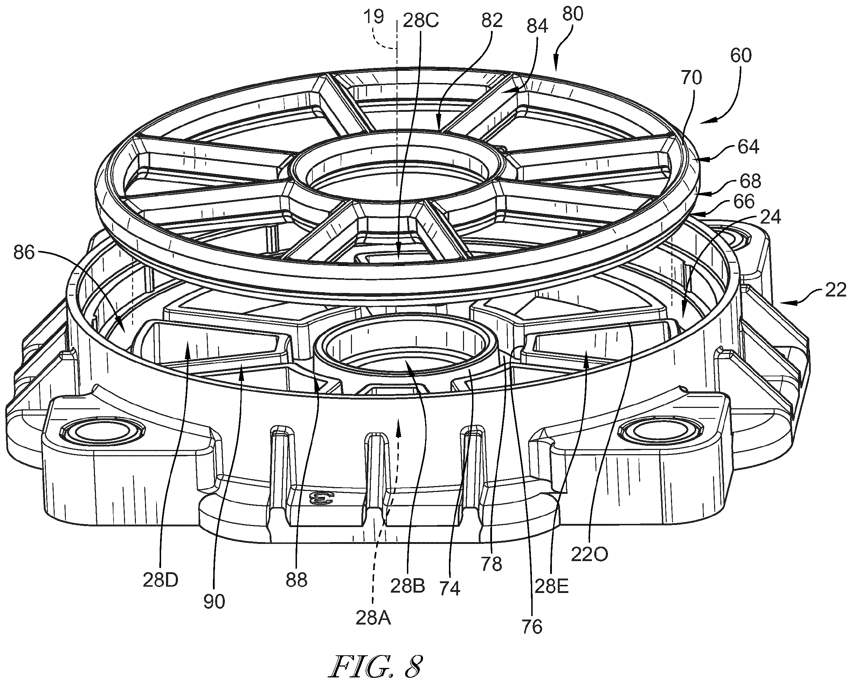

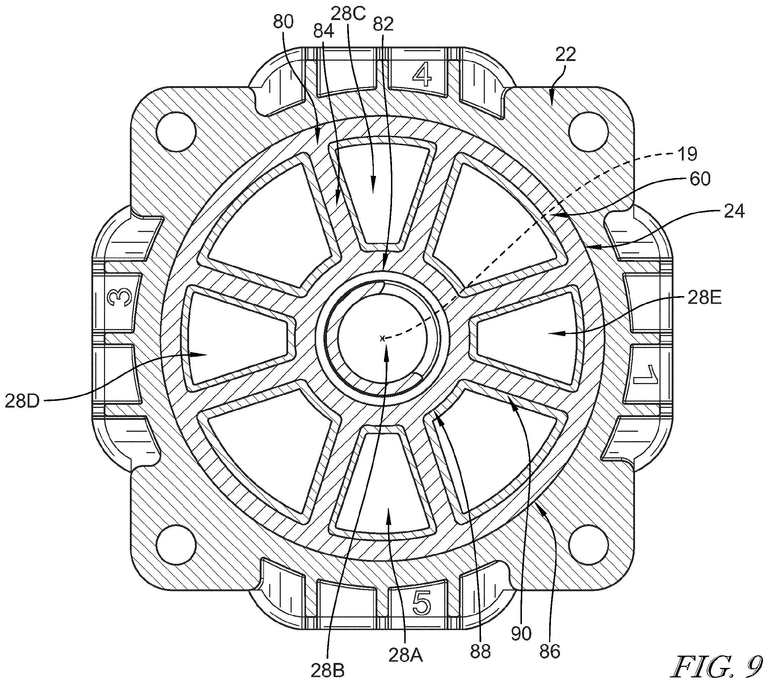

The plurality of apertures 28A-E includes a first aperture 28A, a second aperture 28B, a third aperture 28C, a fourth aperture 28D, and a fifth aperture 28E, as shown in Figs. 8 and 9. In the illustrative embodiment, the second aperture 28B extends axially through the valve housing base 22 at the reference valve axis 19. The other apertures 28A, 28C, 28D, 28E are circumferentially spaced apart about the reference valve axis 19. In the illustrative embodiment, the first aperture 28A, the third aperture 28C, the fourth aperture 28D, and the fifth aperture 28E are spaced apart 45 degrees about the reference valve axis 19.

The valve housing base 22 is formed to include the seal groove 24 that extends axially into the valve housing base 22 away from the valve rotor 30, as shown in Figs. 6 and 8. The seal groove 24 substantially matches a shape of the seal 60 to receive the seal 60 therein. In this way, the seal groove 24 is formed to include an outer groove portion 86, an inner groove portion 88, and a plurality of divider portions 90, as shown in Figs. 2 and 8. The outer groove portion 86 extends entirely circumferentially about the reference valve axis 19. The inner groove portion 88 is spaced radially inward from the outer groove portion 86 and extends entirely circumferentially about the reference valve axis 19. The plurality of divider portions 90 extends between and interconnects the outer groove portion 86 and the inner groove portion 88. Each of the plurality of divider portions 90 are circumferentially spaced apart from one another about the reference valve axis 19.

The seal groove 24 (i.e., each of the outer groove portion 86, the inner groove portion 88, and the plurality of divider portions 90) includes a first sidewall 74, a second sidewall 76 spaced apart from the first sidewall 74, and a bottom wall 78 extending between and interconnecting the first sidewall 74 and the second sidewall 76, as shown in Fig. 6. The bottom wall 78 is substantially perpendicular to the first sidewall 74 and the second sidewall 76.

In the illustrative embodiment, the valve housing 12 further includes a manifold gasket 17, as shown in Figs. 3 and 4. The manifold gasket 17 is located axially below the valve housing base 22.

The valve flow controller 14 includes the valve rotor 30, as shown in Figs. 3 and 4. The valve rotor 30 is arranged in the valve cavity 26 of the valve housing 12. The valve rotor 30 is configured to rotate relative to the valve housing 12 about the reference valve axis 19. The valve rotor 30 cooperates with the valve housing 12 to define the plurality of flow paths through the valve housing base 22. As the valve rotor 30 is rotated about the reference valve axis 19 to different set positions, the valve rotor 30 forms different flow paths to control the flow of fluid through the apertures 28A-E of the valve housing base 22.

The valve rotor 30 is formed to define a first chamber 32 and a second chamber 34, as shown in Figs. 4 and 5. The first chamber 32 is not in fluid communication with the second chamber 34. The valve rotor 30 controls the flow to each aperture 28A, 28B, 28C, 28D, 28E by aligning the first and second chambers 32, 34 with the different apertures 28A, 28B, 28C, 28D, 28E in the different predetermined positions. This controls which apertures 28A, 28B, 28C, 28D, 28E are in fluid communication with each other.

For example, the first chamber 32 allows for fluid communication between the second aperture 28B and one of the apertures 28A, 28C, 28D, 28E, as suggested in Fig. 5. The second chamber 34 allows for fluid communication between two or three of the apertures 28A, 28C, 28D, 28E.

The valve rotor 30 includes a valve rotor body 36 and a valve rotor shaft 38, as shown in Figs. 3, 5, and 7. The valve rotor body 36 defines the first chamber 32 and the second chamber 34. The valve rotor shaft 38 extends axially from the valve rotor body 36 along the reference valve axis 19 and couples to the actuator 29.

As the valve rotor body 36 rotates, the valve rotor body 36 controls the flow to each aperture 28A, 28B, 28D, 28D, 28E included in the valve housing base 22. The valve rotor body 36 controls the flow to each aperture 28A, 28B, 28D, 28D, 28E by aligning the chambers 32, 34 with the apertures 28A, 28B, 28D, 28D, 28E in the different predetermined positions.

The multi-way valve 10 and/or the actuator 29 may include a control unit configured to direct the actuator 29 to move the valve rotor 30 to the different predetermined positions. Based on where the vehicle needs fluid, the control unit may direct the actuator 29 to move the valve rotor 30 to one of the positions for the desired mode.

The sealing system 16 includes the seal 60 and the bias member 62, as shown in Figs. 3 and 4. The seal 60 is located in the seal groove 24 of the valve housing base 22. In this way, the seal 60 remains stationary relative to the valve rotor 30 as the valve rotor 30 rotates. The bias member 62 is configured to apply the axial downward force F to the valve rotor 30 to urge the valve rotor 30 into engagement with the seal 60 so as to increase sealing between the valve rotor 30 and the valve housing base 22.

The seal 60 is shaped to include an outer ring 80, an inner ring 82, and a plurality of divider members 84, as shown in Figs. 3, 8, and 9. The outer ring 80 and the inner ring 82 each extend entirely around the reference valve axis 19. The inner ring 82 is located radially inward of the outer ring 80 relative to the reference valve axis 19. The plurality of divider members 84 extend between and interconnect the outer ring 80 and the inner ring 82. Each of the plurality of divider members 84 are circumferentially spaced apart from one another. Each of the plurality of apertures 28A, 28C, 28D, 28E is formed in the valve housing base 22 between the outer ring 80, the inner ring 82, and adjacent divider members 84, as shown in Fig. 9. The aperture 28B is formed in the valve housing base 22 radially inward of the inner ring 82.

The outer ring 80 of the seal 60 is received in the outer groove portion 86, as suggested in Fig. 8. The inner ring 82 of the seal 60 is received in the inner groove portion 88, and the plurality of divider members 84 of the seal 60 is received in the plurality of divider portions 90 of the seal groove 24.

The seal 60 defines the outer portion 64, the inner portion 66, and the mid-portion 68, as shown in Fig. 6. Each of the outer portion 64, the mid-portion 68, and the inner portion 66 are stacked axially on top of one another. The outer portion 64 of the seal 60 extends axially out of the seal groove 24 toward the valve rotor 30.

The outer portion 64 defines a first outer surface 64A, the outer contact surface 70, and a second outer surface 64B, as shown in Fig. 6. The outer contact surface 70 is formed as the outermost surface of the seal 60 to engage the valve rotor 30. The first outer surface 64A and the second outer surface 64B are each coupled with opposing ends of the outer contact surface 70 to locate the outer contact surface 70 therebetween. The first outer surface 64A is coupled with the outer contact surface 70 to extend axially downward from a first end of the outer contact surface 70 to the mid-portion 68 of the seal 60. The second outer surface 64B is coupled with the outer contact surface 70 to extend axially downward from a second end of the outer contact surface 70 opposite the first end to the mid-portion 68 of the seal 60. The outer contact surface 70 is substantially perpendicular to the reference valve axis 19, and the outer surfaces 64A, 64B each form an obtuse angle with the outer contact surface 70. From the mid-portion 68 to the outer contact surface 70, the outer portion 64 tapers. In other words, a width of the outer portion 64 decreases as the outer portion 64 extends from the mid-portion 68 to the outer contact surface 70. The outer contact surface 70 defines a rotor contact area that interfaces with the valve rotor 30.

Some traditional seals include a polytetrafluoroethylene (PTFE) film along an outer portion of the seal to interface with the valve rotor. However, PTFE film may be expensive and may complicate the manufacturing process. Thus, the seal 60 is provided without any film at the outer contact surface 70. In this way, the seal 60 is integrally formed as a single, one-piece component.

The inner portion 66 of the seal 60 is opposite the outer portion 64 and located entirely in the seal groove 24, as shown in Fig. 6. In some embodiments, the inner portion 66 is formed to include a first surface 66A, a second surface 66B, an inner surface 66C, a third surface 66D, and a fourth surface 66E. The first surface 66A is coupled to the mid-portion 68 of the seal 60 to extend axially downward therefrom toward the bottom wall 78 of the seal groove 24. The second surface 66B extends from the first surface 66A to the inner surface 66C. The inner surface 66C defines an innermost surface of the seal 60. The third surface 66D extends axially upward from the inner surface 66C toward the second sidewall 76 of the seal 60 to connect with the fourth surface 66E, and the fourth surface 66E extends axially upward toward the valve rotor 30 to couple with the mid-portion 68 of the seal 60. Illustratively, the first surface 66A and the fourth surface 66E are substantially parallel to the reference valve axis 19, and the inner surface 66C is substantially perpendicular to the reference valve axis 19. The second surface 66B and the third surface 66D are both angled relative to the reference valve axis 19 to form an obtuse angle between the second surface 66B and the inner surface 66C and an obtuse angle between the inner surface 66C and the third surface 66D.

In some embodiments, any of the first surface 66A, the second surface 66B, the third surface 66D, or the fourth surface 66E may be omitted. Illustratively, each of the first, second, third, and fourth surfaces 66A, 66B, 66D, 66E do not contact the seal groove 24. In some embodiments, the inner surface 66C may abut or engage the bottom wall 78 of the seal groove 24, but a seal is not formed between the inner surface 66C and the bottom wall 78 (i.e., a sufficient seal pressure may not be formed). In some embodiments, the inner surface 66C may be spaced apart from the bottom wall 78 of the seal groove 24. A width of the inner portion 66 of the seal 60 decreases as the inner portion 66 extends from the mid-portion 68 to the inner surface 66C.

The mid-portion 68 of the seal 60 is located entirely in the seal groove 24 and extends between the outer portion 64 and the inner portion 66, as shown in Fig. 6. The mid-portion 68 includes a first groove side contact surface 72A that engages the first sidewall 74 of the seal groove 24 and a second groove side contact surface 72B that engages the second sidewall 76 of the seal groove 24. The mid-portion 68 further includes a first connecting surface 68A and a second connecting surface 68B. The first connecting surface 68A extends between the first groove side contact surface 72A and the first surface 66A of the inner portion 66 of the seal 60. The second connecting surface 68B extends between the second groove side contact surface 72B and the fourth surface 66E of the inner portion 66 of the seal 60. Illustratively, the mid-portion 68 of the seal 60 has a greater width than the outer portion 64 and the inner portion 66. Each of the groove side contact surfaces 72A, 72B defines a housing contact area that interfaces with the respective sidewall 74, 76 of the seal groove 24. Illustratively, the housing contact area of each of the groove side contact surfaces 72A, 72B is greater than the rotor contact area of the outer contact surface 70 of the outer portion 64 of the seal 60, as shown in Fig. 6.

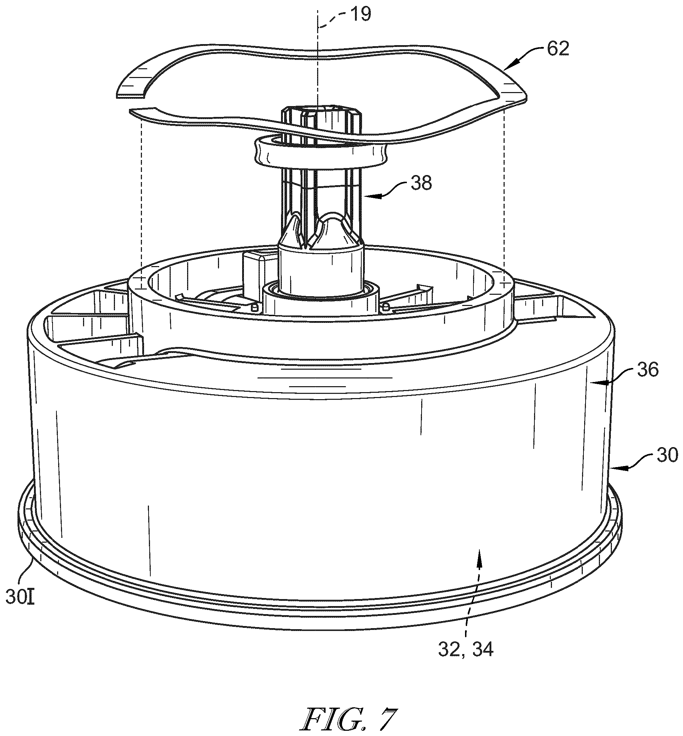

The bias member 62 applies the axial downward force F to the valve rotor 30 to force the valve rotor 30 into engagement with the outer contact surface 70 of the outer portion 64 of the seal 60, as shown in Fig. 5. The bias member 62 is located axially between the valve housing body 20 and the valve rotor 30. In some embodiments, the bias member 62 is a wave spring, as shown in Fig. 7. The wave spring extends circumferentially about the reference valve axis 19. As compared to more traditional springs, the wave spring has a relatively small height. The wave spring, thus, helps to decrease a height of the multi-way valve 10 to form a more compact system.

In the illustrative embodiment, the seal 60 is an integrally formed, single-piece component formed via injection molding. In the illustrative embodiment, the seal 60 comprises thermoplastic vulcanizates (TPV). In other embodiments, the seal 60 may be made of another suitable material. The seal 60 is interference fit with the seal groove 24 of the valve housing base 22, as suggested in Figs. 5 and 6. In some embodiments, the interference fit is a press fit. As the seal 60 is fit into the seal groove 24, the material of the seal 60 undergoes compression in response to forces from the sidewalls 74, 76 of the seal groove 24 (i.e., the housing sealing force). The seal groove 24 exerts the housing sealing force onto the groove side contact surfaces 72A, 72B due to the interference fit.

The rotor sealing force applied to the outer contact surface 70 of the outer portion 64 of the seal 60 by the valve rotor 30 is an axial force (i.e., the axial downward force F applied to the valve rotor 30 by the bias member 62), and the housing sealing force applied to the groove side contact surfaces 72A, 72B of the mid-portion 68 of the seal 60 is a radial force (i.e., the force due to the interference fit). The rotor seal pressure at the interface between the valve rotor 30 and the outer contact surface 70 of the outer portion 64 of the seal 60 is dependent on the rotor sealing force and the rotor contact area between the valve rotor 30 and the outer contact surface 70.

The housing seal pressure at the interface between the seal groove 24 and the groove side contact surfaces 72A, 72B of the mid-portion 68 of the seal 60 is dependent on the housing sealing force and the housing contact area between the seal groove 24 and the groove side contact surfaces 72A, 72B. The rotor sealing force and the housing sealing force are independent, or de-coupled, from one another as both sealing forces depend on different variables (i.e., the axial downward force F and the forces of the interference fit). Because the sealing forces are independent, the rotor sealing force may be reduced without influencing the housing sealing force or the housing seal pressure. In doing so, friction between the seal 60 and the valve rotor 30 may be reduced as well. Thus, the torque needed to rotate the valve rotor 30 is reduced and the wear on the seal 60 is reduced.

In some embodiments, the seal 60 may be plasma treated so as to decrease the coefficient of friction of the outer contact surface 70 of the seal 60. Though the seal 60 is shown in use with a 5-way multi-way valve 10, the seal 60 may be used with other multi-way valves, such as a 6-way multi-way valve.

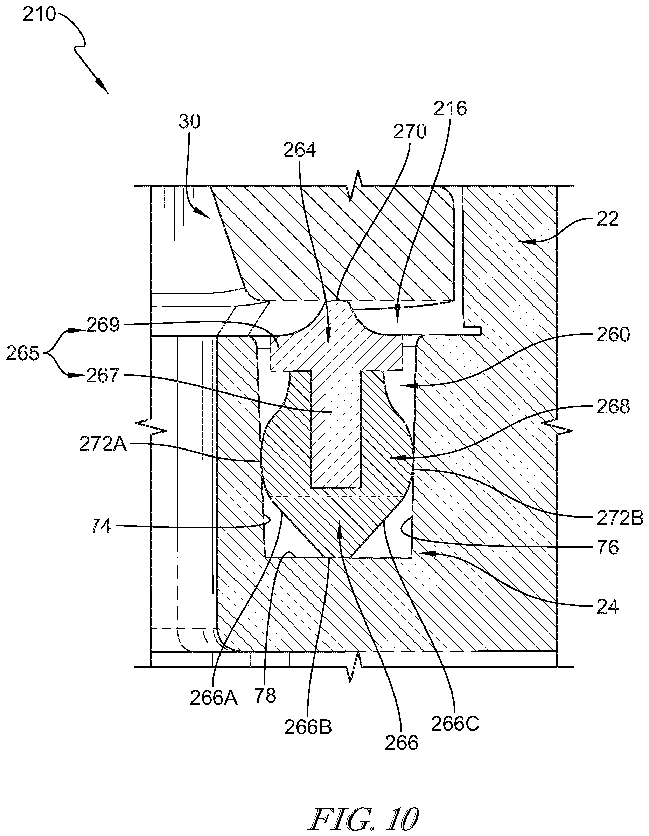

Another embodiment of a multi-way valve 210 in accordance with the present disclosure is shown in Fig. 10. The multi-way valve 210 is substantially similar to the multi-way valve 10 shown in Figs. 1-9 and described herein. Accordingly, similar reference numbers in the 200 series indicate features that are common between the multi-way valve 10 and the multi-way valve 210. The description of the multi-way valve 10 is incorporated by reference to apply to the multi-way valve 210, except in instances when it conflicts with the specific description and the drawings of the multi-way valve 210.

As compared to the multi-way valve 10, the multi-way valve 210 includes a different seal 260. A sealing system 216 includes the seal 260 and the bias member 62. The seal 260 is located in the seal groove 24 of the valve housing base 22. The bias member 62 is configured to apply the axial downward force F on the valve rotor 30 to urge the valve rotor 30 into engagement with the seal 260 so as to increase sealing between the valve rotor 30 and the valve housing base 22.

The seal 260 is shaped to include an outer portion 264, an inner portion 266, and a mid-portion 268, as shown in Fig. 10. The outer portion 264 of the seal 260 is defined by a cap 265. The cap 265 includes an insert 267 and a top 269 coupled with the insert 267. The insert 267 is located inside of the mid-portion 268 of the seal 260. The top 269 of the cap 265 is located outward of the mid-portion 268 of the seal 260 and extends axially out of the seal groove 24 toward the valve rotor 30. The cap 265 includes an outer contact surface 270 formed as an outermost surface of the seal 260 to engage the valve rotor 30. In illustrative embodiments, the cap 265 is T-shaped with a bulge defining the outer contact surface 270. Illustratively, the outer portion 264 of the seal 260 (i.e., the cap 265) does not contact the seal groove 24.

The inner portion 266 of the seal 260 is opposite the outer portion 264 and located entirely in the seal groove 24, as shown in Fig. 10. The inner portion 266 is formed to include a first surface 266A, an inner surface 266B, and a second surface 266C. The first surface 266A is coupled to the mid-portion 268 of the seal 260 to extend axially downward therefrom toward the bottom wall 78 of the seal groove 24 to the inner surface 266B. The inner surface 266B defines an innermost surface of the seal 260. The second surface 266C extends axially upward from the inner surface 266B to the mid-portion 268 of the seal 260. Illustratively, each of the first and second surfaces 266A, 266C do not contact the seal groove 24. In some embodiments, the inner surface 266B may abut or engage the bottom wall 78 of the seal groove 24. In some embodiments, the inner surface 266B may be spaced apart from the bottom wall 78 of the seal groove 24. A width of the inner portion 266 of the seal 260 decreases as the inner portion 266 extends from the mid-portion 268 to the inner surface 266B.

The mid-portion 268 of the seal 260 is located entirely in the seal groove 24 and extends between the outer portion 264 and the inner portion 266, as shown in Fig. 10. The mid-portion 268 includes a first groove side contact surface 272A that engages the first sidewall 74 of the seal groove 24 and a second groove side contact surface 272B that engages the second sidewall 76 of the seal groove 24. Illustratively, the mid-portion 268 has a greater width than the outer portion 264 and the inner portion 266 such that only the mid-portion 268 contacts the sidewalls 74, 76 of the seal groove 24. In some embodiments, as the mid-portion 268 extends axially away from the top 269 of the cap 265, the mid-portion 268 extends outwardly, and then extends inwardly. In other words, a width of the mid-portion 268 increases as the mid-portion 268 extends axially away from the top 269 of the cap 265 until the mid-portion 268 reaches a maximum width. At the maximum width, the groove side contact surfaces 272A, 272B contact the sidewalls 74, 76 of the seal groove 24. From the maximum width, the mid-portion 268 decreases in width until the mid-portion 268 connects with the inner portion 266 of the seal 260.

In the illustrative embodiment, the mid-portion 268 and the inner portion 266 of the seal 260 are integrally formed, and the outer portion 264 is a separate component, as suggested in Fig. 10. The mid-portion 268 and the inner portion 266 of the seal 260 are over molded onto the outer portion 264. In the illustrative embodiment, the mid-portion 268 and the inner portion 266 of the seal 260 comprise thermoplastic vulcanizates (TPV). The outer portion 264 of the seal 260 comprises a material having a greater hardness than that of the mid-portion 268 and the inner portion 266. In some embodiments, the outer portion 264 of the seal 260 comprises a plastics material.

The seal 260 is interference fit with the seal groove 24 of the valve housing base 22. In some embodiments, the interference fit is a press fit. As the seal 260 is fit into the seal groove 24, the material of the mid-portion 268 of the seal 260 undergoes compression in response to a housing sealing force. The seal groove 24 exerts the housing sealing force onto the groove side contact surfaces 272A, 272B due to the interference fit.

The rotor sealing force applied to the outer contact surface 270 of the outer portion 264 of the seal 260 by the valve rotor 30 is an axial force (i.e., the axial downward force F applied to the valve rotor 30 by the bias member 62), and the housing sealing force applied to the groove side contact surfaces 272A, 272B of the mid-portion 268 of the seal 260 is a radial force (i.e., the force due to the interference fit). The rotor seal pressure at the interface between the valve rotor 30 and the outer contact surface 270 of the outer portion 264 of the seal 260 is dependent on the rotor sealing force and the rotor contact area between the valve rotor 30 and the outer contact surface 270. The housing seal pressure at the interface between the seal groove 24 and the groove side contact surfaces 272A, 272B of the mid-portion 268 of the seal 260 is dependent on the housing sealing force and the housing contact area between the seal groove 24 and the groove side contact surfaces 272A, 272B. The rotor sealing force and the housing sealing force are independent, or de-coupled, from one another as both sealing forces depend on different variables (i.e., the axial downward force F and the force of the interference fit). Because the sealing forces are independent, the rotor sealing force may be reduced without influencing the housing sealing force or the housing seal pressure. In doing so, friction between the seal 260 and the valve rotor 30 may be reduced as well. Thus, the torque needed to rotate the valve rotor 30 is reduced and the wear on the seal 260 is reduced.

According to an aspect of the disclosure, a multi-way valve 10, 210 is provided, comprising a valve housing 12 including a seal groove 24, the valve housing 12 shaped to define a valve cavity 26 and a plurality of apertures 28A-E that open into the valve cavity 26, a valve flow controller 14 including a valve rotor 30 arranged in the valve cavity 26 of the valve housing 12 and configured to rotate relative to the valve housing 12 about a reference valve axis 19 and an actuator 29 coupled to the valve rotor 30 to drive rotation of the valve rotor 30 about the reference valve axis 19, wherein the valve rotor 30 cooperates with the valve housing 12 to define a plurality of flow paths when the valve rotor 30 is rotated about the reference valve axis 19 to a plurality of different predetermined positions to control a flow of fluid through the valve housing 12, and a sealing system 16, 216 configured to seal 60, 260 between the valve rotor 30 and the valve housing 12 in the valve cavity 26, the sealing system 16, 216 including a seal 60, 260 and a bias member 62, the seal 60, 260 arranged in the seal groove 24 of the valve housing 12, and the bias member 62 configured to apply an axial force to the valve rotor 30 to urge the valve rotor 30 into engagement with the seal 60, 260 to seal therebetween, wherein the seal 60, 260 is shaped to include an outer portion 64, 264 that extends out of the seal groove 24 of the valve housing 12 toward the valve rotor 30 and includes an outer contact surface 70, 270 that engages the valve rotor 30 to block movement of the fluid out of the plurality of flow paths between the outer contact surface 70, 270 and the valve rotor 30, an inner portion 66, 266 opposite the outer portion 64, 264 and located in the seal groove 24, and a mid-portion 68, 268 extending between the outer portion 64, 264 and the inner portion 66, 266 and located in the seal groove 24, the mid-portion 68, 268 including a groove side contact surface 72, 272 that engages the seal groove 24 of the valve housing 12 to block movement of the fluid out of the plurality of flow paths between the groove side contact surface 72, 272 and the valve housing 12, wherein compressive forces applied to the outer contact surface 70, 270 by the valve rotor 30 and compressive forces applied to the groove side contact surface 72, 272 by the valve housing 12 are substantially independent of one another so that the compressive forces applied to the groove side contact surface 72, 272 by the valve housing 12 are not transferred to the outer contact surface 70, 270 in order to avoid inducing excess friction on the valve rotor 30 that would resist rotation of the valve rotor 30. Preferably, the seal 60, 260 is an integral component. Preferably, the seal 60, 260 is formed of thermoplastic vulcanizates. Preferably, the seal 60, 260 is shaped to include an outer ring 80 extending around the reference valve axis 19, an inner ring 82 extending around the reference valve axis 19 and arranged radially inward of the outer ring 80, and a plurality of divider members 84 extending radially between and interconnecting the inner ring 82 and the outer ring 80.

Preferably, the seal groove 24 is defined by a first sidewall 74, a second sidewall 76 spaced apart from the first sidewall 74, and a bottom wall extending between and interconnecting the first sidewall 74 and the second sidewall 76, and wherein the groove side contact surface 72, 272 of the mid-portion 68, 268 of the seal 60, 260 includes a first groove side contact surface 72A, 272A that engages the first sidewall 74 and a second groove side contact surface 72B, 272B that engages the second sidewall 76. Preferably, the inner portion 66, 266 of the seal 60, 260 does not contact the first sidewall 74 of the seal groove 24 or the second sidewall 76 of the seal groove 24.

In particular, the outer portion 64, 264 of the seal 60, 260 tapers as the outer portion 64, 264 extends from the mid-portion 68, 268 of the seal 60, 260 to the outer contact surface 70, 270 of the outer portion 64, 264 of the seal 60, 260, and wherein the outer contact surface 70, 270 of the outer portion 64, 264 of the seal 60, 260 is substantially flat and perpendicular to the reference valve axis 19. In particular, the mid-portion 68, 268 of the seal 60, 260 is wider than the outer portion 64, 264 of the seal 60, 260 and the inner portion 66, 266 of the seal 60, 260. In particular, the seal 60, 260 is interference fit with the seal groove 24. In particular, the outer portion 64, 264 of the seal 60, 260 is defined by a cap 265, and wherein the mid-portion 68, 268 and the inner portion 66, 266 of the seal 60, 260 are over molded onto the cap 265. Preferably, the cap 265 includes an insert located internal to the mid-portion 68, 268 of the seal 60, 260 and a top 269 coupled with the insert and extending axially away from the insert toward the valve rotor 30 to locate the top 269 of the cap 265 axially between the valve rotor 30 and the mid-portion 68, 268 of the seal 60, 260 so that the outer contact surface 70, 270 of the outer portion 64, 264 of the seal 60, 260 engages the valve rotor 30.

Preferably, the cap 265 of the seal 60, 260 comprises plastics material. Preferably, the mid-portion 68, 268 and the inner portion 66, 266 of the seal 60, 260 are formed of thermoplastic vulcanizates. In particular, the bias member 62 is a wave spring. Preferably, the wave spring is located axially between the valve housing 12 and the valve rotor 30, and wherein the wave spring extends circumferentially about the reference valve axis 19.

## Claims

1. A multi-way valve (10, 210) comprising
a valve housing (12) shaped to define a valve cavity (26) and a plurality of apertures (28A-E) that open into the valve cavity (26),
a valve flow controller (14) including a valve rotor (30) arranged in the valve cavity (26) of the valve housing (12) and configured to rotate relative to the valve housing (12) about a reference valve axis (19) and an actuator (29) coupled to the valve rotor (30) to drive rotation of the valve rotor (30) about the reference valve axis (19), wherein the valve rotor (30) cooperates with the valve housing (12) to define a plurality of flow paths when the valve rotor (30) is rotated about the reference valve axis (19) to a plurality of different predetermined positions to control a flow of fluid through the valve housing (12), and
a sealing system (16, 216) including a seal (60, 260) located axially between the valve rotor (30) and the valve housing (12) in the valve cavity (26) and a bias member (62) configured to apply an axial force to the valve rotor (30) to urge the valve rotor (30) into engagement with the seal (60, 260) to seal therebetween,
wherein the seal (60, 260) is shaped to include an outer portion (64, 264) that extends toward the valve rotor (30) outwardly beyond the valve housing (12) and includes an outer contact surface (70, 270) that engages the valve rotor (30), an inner portion (66, 266) opposite the outer portion (64, 264), and a mid-portion (68, 268) extending between the outer portion (64, 264) and the inner portion (66, 266), the mid-portion (68, 268) including a side contact surface (72, 272) that engages the valve housing (12).

2. The multi-way valve (10, 210) of claim 1, wherein the seal (60, 260) is an integral component and/or formed of thermoplastic vulcanizates.

3. The multi-way valve (10, 210) of claim 1, wherein the seal (60, 260) is shaped to include an outer ring (80) extending around the reference valve axis (19), an inner ring (82) extending around the reference valve axis (19) and arranged radially inward of the outer ring (80), and a plurality of divider members (84) extending radially between and interconnecting the inner ring (82) and the outer ring (80).

4. The multi-way valve (10, 210) of claim 1, wherein the outer portion (64, 264) of the seal (60, 260) tapers as the outer portion (64, 264) extends from the mid-portion (68, 268) of the seal (60, 260) to the outer contact surface (70, 270) of the outer portion (64, 264) of the seal (60, 260), preferably wherein the outer contact surface (70, 270) of the outer portion (64, 264) of the seal (60, 260) is substantially flat and perpendicular to the reference valve axis (19).

5. The multi-way valve (10, 210) of claim 16, wherein the valve housing (12) includes a seal groove (24) to receive the seal (60, 260) therein, and wherein the outer portion (64, 264) of the seal (60, 260) extends out of the seal groove (24) of the valve housing (12) toward the valve rotor (30), the inner portion (66, 266) of the seal (60, 260) is located in the seal groove (24), and the mid-portion (68, 268) of the seal (60, 260) is located in the seal groove (24) so that the side contact surface (72, 272) engages the seal groove (24).

6. The multi-way valve (10, 210) of any of the preceding claims 1 to 3, comprising
the valve housing (12) including a seal groove (24), the valve housing (12) shaped to define the valve cavity (26) and the plurality of apertures (28A-E) that open into the valve cavity (26),
the valve flow controller (14) including the valve rotor (30) arranged in the valve cavity (26) of the valve housing (12) and configured to rotate relative to the valve housing (12) about the reference valve axis (19) and the actuator (29) coupled to the valve rotor (30) to drive rotation of the valve rotor (30) about the reference valve axis (19), wherein the valve rotor (30) cooperates with the valve housing (12) to define the plurality of flow paths when the valve rotor (30) is rotated about the reference valve axis (19) to the plurality of different predetermined positions to control the flow of fluid through the valve housing (12), and
the sealing system (16, 216) configured to seal (60, 260) between the valve rotor (30) and the valve housing (12) in the valve cavity (26), the sealing system (16, 216) including the seal (60, 260) and the bias member (62), the seal (60, 260) arranged in the seal groove (24) of the valve housing (12), and the bias member (62) configured to apply an axial force to the valve rotor (30) to urge the valve rotor (30) into engagement with the seal (60, 260) to seal therebetween,
wherein the seal (60, 260) is shaped to include the outer portion (64, 264) that extends out of the seal groove (24) of the valve housing (12) toward the valve rotor (30) and includes the outer contact surface (70, 270) that engages the valve rotor (30) to block movement of the fluid out of the plurality of flow paths between the outer contact surface (70, 270) and the valve rotor (30), the inner portion (66, 266) opposite the outer portion (64, 264) and located in the seal groove (24), and the mid-portion (68, 268) extending between the outer portion (64, 264) and the inner portion (66, 266) and located in the seal groove (24), the mid-portion (68, 268) including the groove side contact surface (72, 272) that engages the seal groove (24) of the valve housing (12) to block movement of the fluid out of the plurality of flow paths between the groove side contact surface (72, 272) and the valve housing (12),
wherein compressive forces applied to the outer contact surface (70, 270) by the valve rotor (30) and compressive forces applied to the groove side contact surface (72, 272) by the valve housing (12) are substantially independent of one another so that the compressive forces applied to the groove side contact surface (72, 272) by the valve housing (12) are not transferred to the outer contact surface (70, 270) in order to avoid inducing excess friction on the valve rotor (30) that would resist rotation of the valve rotor (30).

7. The multi-way valve (10, 210) of any of the two preceding claims, wherein the seal groove (24) is defined by a first sidewall (74), a second sidewall (76) spaced apart from the first sidewall (74), and a bottom wall extending between and interconnecting the first sidewall (74) and the second sidewall (76), and
wherein the groove side contact surface (72, 272) of the mid-portion (68, 268) of the seal (60, 260) includes a first groove side contact surface (72A, 272A) that engages the first sidewall (74) and a second groove side contact surface (72B, 272B) that engages the second sidewall (76).

8. The multi-way valve (10, 210) of claim 7, wherein the inner portion (66, 266) of the seal (60, 260) does not contact the first sidewall (74) of the seal groove (24) or the second sidewall (76) of the seal groove (24).

9. The multi-way valve (10, 210) of claim 1, wherein the mid-portion (68, 268) of the seal (60, 260) is wider than the outer portion (64, 264) of the seal (60, 260) and the inner portion (66, 266) of the seal (60, 260).

10. The multi-way valve (10, 210) of any of the claims 5 to 8, wherein the seal (60, 260) is interference fit with the seal groove (24).

11. The multi-way valve (10, 210) of claim 1, wherein the outer portion (64, 264) of the seal (60, 260) is defined by a cap (265), and wherein the mid-portion (68, 268) and the inner portion (66, 266) of the seal (60, 260) are over molded onto the cap (265).

12. The multi-way valve (10, 210) of claim 11, wherein the cap (265) includes an insert located internal to the mid-portion (68, 268) of the seal (60, 260) and a top (269) coupled with the insert and extending axially away from the insert toward the valve rotor (30) to locate the top (269) of the cap (265) axially between the valve rotor (30) and the mid-portion (68, 268) of the seal (60, 260) so that the outer contact surface (70, 270) of the outer portion (64, 264) of the seal (60, 260) engages the valve rotor (30).

13. The multi-way valve (10, 210) of claim 11, wherein the cap (265) of the seal (60, 260) comprises plastics material.

14. The multi-way valve (10, 210) of claim 11, wherein the mid-portion (68, 268) and the inner portion (66, 266) of the seal (60, 260) are formed of thermoplastic vulcanizates.

15. The multi-way valve (10, 210) of claim 1, wherein the bias member (62) is a wave spring, preferably extending circumferentially about the reference valve axis (19) and being located axially between the valve housing (12) and the valve rotor (30).
